Europäisches Patentamt

European Patent Office

Office européen des brevets

(11) Publication number: **0 422 823 A2**

## EUROPEAN PATENT APPLICATION

(21) Application number: 90310811.6

(51) Int. Cl.5: **C09K 5/00**

(22) Date of filing: 03.10.90

(30) Priority: **13.10.89 GB 8923088**

(43) Date of publication of application:
**17.04.91 Bulletin 91/16**

(84) Designated Contracting States:
**AT BE CH DE DK ES FR GB GR IT LI NL SE**

(71) Applicant: **IMPERIAL CHEMICAL INDUSTRIES PLC**
**Imperial Chemical House, Millbank**
**London SW1P 3JF(GB)**

(72) Inventor: **Makin, Pamela Louise**
**5 Lundall Avenue, Asenby**
**Thirsk, North Yorkshire(GB)**
Inventor: **Brown, Michael**
**22 Banklands**
**Darlington, Co Durham(GB)**
Inventor: **Eastwood, John**
**10 Coris Close, Marton**
**Middlesbrough, Cleveland(GB)**

(74) Representative: **Locke, Timothy John et al**
**Imperial Chemical Industries PLC Legal**
**Department: Patents Bessemer Road PO Box 6**
**Welwyn Garden City Hertfordshire, AL7 1HD(GB)**

(54) **Heat transfer and fluids therefor.**

(57) Use of compounds of formula $X[AR]_n$ wherein X is the residue of an active nitrogen containing compound, A is a random or block polyoxyalkylene residue, comprising 6 to 170 alkylene oxide residues, each residue having 2 to 4 carbon atoms, R is a hydrocarbyl residue or hydrogen and n is an integer having a value of at least 1 wherein for values greater than 1 each AR residue may be the same or different, as heat transfer fluids.

EP 0 422 823 A2

Xerox Copy Centre

## HEAT TRANSFER AND FLUIDS THEREFOR

This invention relates to heat transfer and fluids therefor. The present invention is concerned with heat transfer at high temperatures, for example in solder reflow baths used in the manufacture of printed circuit boards. It is known that certain halogenated hydrocarbons for example polychlorinated and polybrominated biphenyls and biphenyloxides may be used in high temperature applications in which resistance to flammability is an important consideration. However these compounds have limited application due to their low water solubility which complicates washing from for example printed circuit boards, potentially carcinogenic effect and deleterious effect on the environment. Polyoxyalkylene glycols of both low and high molecular weight which have been initiated with alcohols have also been used as high temperature heat transfer fluids and have achieved some success and do not suffer from some of the drawbacks associated with halogenated hydrocarbons. Commercially available alcohol initiated polyoxyalkylene glycols are disclosed in the sales brochure " 'EMKAROX' Polyalkylene Glycols, Properties and Applications", published in September 1988 by Imperial Chemical Industries PLC, Chemical Products Business Centre. However, there is a tendency for polyoxyalkylene glycols to decompose thermally when used in applications in which temperatures above about 220°C are required, thereby decreasing the effectiveness of the fluid. Furthermore the decomposition of such fluids creates associated problems for example, deposition of decomposition products which may prove difficult to remove using standard washing techniques and excessive fuming which may limit their use to closed system applications. The extent to which a heat transfer fluid decomposes at a given temperature may be measured by monitoring the decrease in average molecular weight of the fluid over a period of time. Known heat transfer fluids are generally formulated with one or more additives, for example anti-oxidants or corrosion inhibitors.

We have now surprisingly found that polyoxyalkylene polymers initiated with active nitrogen containing compounds which are suitably organic amines, provide compounds which have improved thermal stability. The improvement in thermal stability reduces the problems associated with thermal decomposition as experienced with alcohol initiated polyoxyalkylene glycols, and consequently allows for a longer working time of the heat transfer fluid. These compounds also possess a desirable combination of other properties including good flow characteristics, cold water solubility and high flash points and as such provide excellent heat transfer fluids in either a substantially pure or formulated form for high temperature applications.

The present invention comprises the use of compounds (I) of formula

X[AR]$_n$     (I)

wherein X is the residue of an active nitrogen containing compound;

A is a random or block polyoxyalkylene residue, comprising 6 to 170 alkylene oxide residues, each residue having 2 to 4 carbon atoms

R is a hydrocarbyl residue or hydrogen; and

n is an integer having a value of at least 1 wherein for values greater than 1 each AR residue may be the same or different;

as heat transfer fluids.

Suitably, compounds (I) have a viscosity of 10 to 2000, preferably 10 to 1000 and more preferably 100 to 460 centistokes at 40°C, and an average molecular weight of 300 to 15000, preferably of 500 to 10000 and more preferably from 700 to 7500.

The polyoxyalkylene residue A preferably comprises 10 to 140 and more preferably 10 to 120 alkylene oxide residues, each residue having 2 to 4 and preferably 2 to 3 carbon atoms. Suitable compounds (I) are those in which A preferably comprises 0 to 10, more preferably 1 to 8 and most preferably 1 to 6 propylene oxide residues for every 10 ethylene oxide residues.

R is hydrogen or a hydrocarbyl residue comprising from 1 to 30 carbon atoms, preferably 1 to 15 carbon atoms, and more preferably from 1 to 10 carbon atoms for example a methyl, ethyl, propyl, isopropyl, butyl group or benzyl group. The value of n is preferably 1 to 20, more preferably 1 to 12 and especially 1 to 9.

Conveniently, X is the residue of an active hydrogen-containing amine compound having primary, secondary and/or tertiary amine groups, amide or ammonia following active hydrogen removal. It is suitably a residue of an aromatic, aliphatic or alicyclic amine having 1 to 50 carbon atoms, preferably 1 to 30 carbon atoms, and more preferably 1 to 15 carbon atoms, together with 1 to 20 amine groups, more preferably 1 to 10 amine groups and most preferably 1 to 6 amine groups. Suitable compounds for use in the present invention include those in which X is a residue of an alkylamine, an alkanolamine, an alkylenediamine.

Examples of suitable alkylamines include, butylamine, alkyl diethanolamine and alkyl triethanol propylene diamine wherein the alkyl group is a mixture of C$_{13}$ and C$_{15}$ alkyl chains in the approximate weight

2

ratio of 70:30, 50% of these groups being linear, and the balance comprising mainly 2-methyl branched species. Examples of suitable alkanolamines include, monoethanolamine, diethanolamine, triethanolamine and triisopropanolamine Examples of suitable alkylene diamines include, ethylenediamine, diethylenediamine, triethylenediamine and especially piperazine. The derivative obtained on reacting 1 mole equivalent of ethylenediamine with 4 mole equivalents of propylene oxide provides a compound suitable for initiating polymerisation to form the compounds (I) of the present invention.

Compounds (I) of the present invention may be prepared by contacting the active nitrogen containing compound either simultaneously or successively with the desired alkylene oxides, the amounts for reaction being dependent on the viscosity and molecular weight required for the compound (I). Compounds (I) are usually prepared in the presence of a suitable catalyst, typically a base for example, sodium methoxide, sodium borohydride, sodium hydroxide and/or potassium hydroxide in amounts up to 5 per cent by weight of the total reactants. Other compounds which are suitable catalysts for such a preparation include Lewis acids for example boron trifluoride, mineral acids and paratoluene sulphonic acid. The reaction may be conducted in the presence of a solvent including volatile hydrocarbons for example toluene, but is usually conducted in the absence of any solvent. The reaction is suitably carried out at a temperature of 100 to 180°C, preferably 150 to 160°C for ethoxylation, 105 to 115°C for propoxylation or butoxylation or 105 to 130°C, preferably 115 to 130°C for reaction with a mixture of alkylene oxides. The reaction is conveniently carried out at elevated pressure, preferably 1.5 to 12 bar absolute and most preferably at 1.5 to 8 bar absolute.

Heat transfer fluids which are known in the art are usually formulated with anti-oxidant compounds in order to improve the thermal stability of the compositions when used in high temperature applications. However the compounds (I) of the present invention may provide an anti-oxidising effect and may therefore be used in a substantially pure form, although it may be desirable, depending on the particular application, to formulate the compounds (I) with certain additives. A variety of such additives may be formulated therewith to provide specific functions whilst maintaining the thermal stability of the heat transfer fluid.

Accordingly the present invention also comprises heat transfer fluid compositions suitable for use in heat transfer processes which comprise a compound (I), an anti-oxidant and optionally at least one additive.

Optionally such compositions may also include a diluent for example water in amounts of 0.1 to 40% and preferably 10 to 35% by weight of the total composition.

Anti-oxidants are suitably present in heat transfer compositions for applications in which air is present in the system in sufficient quantities to promote oxidation. Suitably the antioxidant is present in an amount sufficient to improve the thermal stability of the compound (I), such amounts being preferably from 0.05 to 5%, more preferably from 0.1 to 1.5% and most preferably from 0.5 to 1.5% by weight of the total composition. Suitable anti-oxidants include for example IRGANOX 1010, available from Ciba-Geigy Corporation, Manchester, England, butylhydroxyanisole, hydroquinone monomethyl ether, phenothiazine and/or butylhydroxytoluene.

Suitable additives include, surface activators, corrosion inhibitors, buffers, wetting agents, anti-foaming agents, biocides and other heat transfer fluids.

Surface activators may be present in heat transfer applications which require preparation of surfaces for example in reflowing of printed circuit boards where removal of unwanted oxide coatings is desirable. Such compounds suitably include inorganic acids for example, hydrochloric, hydrobromic and fluoroboric acids and may be present in amounts of 0.1 to 40 grammes per litre of composition. Suitable corrosion inhibitors include carboxylic acids, preferably those having from 9 to 22 carbon atoms for example oleic acid and half esters of alkenyl succinic acids, organic amines, amides and organic and inorganic salts thereof and N-acyl sarcosine and benzotriazole and may be present in amounts of 0.01 to 1% by weight of the composition. Suitable buffers include phosphates, borates and bicarbonates which are soluble in the compound (I) and are preferably present in an amount such that the pH of the heat transfer fluid composition is in the range 7.0 to 11.5 and more preferably 7.5 to 10.5. Wetting agents which may be used include for example nonyl phenol ethoxylates and may be present in amounts of 0.05 to 1% by weight of the composition. Suitable anti-foaming agents are known to those skilled in the relevant art and include polyoxyalkylene glycol ethers for example, "SYNPERONIC PE/L61" available from ICI Chemicals & Polymers Ltd Wilton, England and silicone oils which are compatible with the compounds (I) and may be present in amounts of 0.01 to 0.5% by weight of the composition. Other heat transfer fluids may also be used as additives for example "EMKAROX" polyoxyalkylene glycols, available from ICI Chemicals & Polymers Ltd Wilton, England, however the amounts used should be sufficiently small in order to maintain the improved thermal stability of the heat transfer fluid composition.

In order to tailor the properties of the heat transfer fluid compositions to individual applications, any combination of the above additives may be selected in order to produce the desired effect.

3

The present invention also comprises a process of heat treating an object, for example effecting solder reflow on a printed circuit board, which comprises contacting the object with a heat transfer fluid which comprises compound(s) (I) at an elevated temperature. The term "heat treating" includes effecting a physical change in the object for example a temporary or permanent change of state.

Suitably the object is contacted with the heat transfer fluid for a period of 1 second to 5 minutes, preferably 5 seconds to 1 minute and more preferably 5 to 30 seconds. The compounds (I) and compositions of the present invention may be used advantageously in a variety of applications, in either open or closed systems, in which fluids of improved thermal stability are required, in for example, tempering baths, alloying baths, solder pots and metal quenching.

The invention is illustrated with reference to the following non-limiting examples.

Example 1

Preparation of a Piperazine Initiated Polyoxyalkylene Heat Transfer Fluid (coded as Piperazine 31-130)

5.5 kg of piperazine was charged to a reactor and mixed with a solution of potassium hydroxide (126g) in water (90g) at ambient temperature and pressure. Nitrogen was then bubbled through the reaction mixture until a pressure of 2 bar absolute was obtained.

The reaction mixture was then heated to a temperature of 120 to 125°C and 6kg of a 3:1 weight ratio of ethylene oxide to propylene oxide was added to the reaction mixture over a period of 1 hour during which the pressure increased from 2.4 bar absolute to 3.4 bar absolute. On completion of the addition of the ethylene oxide/propylene oxide mixture, the reaction mixture was maintained at a temperature of 120 to 125°C for 1 hour. The reaction mixture was then stripped for 1 hour at about 110°C under a vacuum of 5 to 15mm Hg. Nitrogen was bubbled through the reaction mixture until a pressure of 2 bar absolute was obtained.

The reaction mixture was then heated to about 120°C and then a further 39.5kg of a 3:1 weight ratio of ethylene oxide to propylene oxide was added over a period of 6 hours 30 minutes during which the pressure rose from 2 bar absolute to 6.8 bar absolute. On completion of the addition of the ethylene oxide/propylene oxide mixture, the reaction mixture was maintained at a temperature of 120 to 125°C for 1 hour. The reaction mixture was then stripped for 1 hour at about 110°C and at a pressure of 5 to 15mm Hg.

30kg of the product obtained from the second stripping process was left at room temperature for 30 minutes and then heated under atmospheric pressure to about 120°C and maintained at about 120°C for 1 hour in order to dehydrate the reaction mixture. Nitrogen was then bubbled through the reaction mixture until a pressure of 2 bar absolute was obtained.

A further 20kg of a 3:1 weight ratio of ethylene oxide to propylene oxide was added over a period of 3 hours during which the temperature was maintained at about 115°C and the pressure rose from 2 bar absolute to 6.2 bar absolute. On completion of the addition of the ethylene oxide/propylene oxide mixture, the reaction mixture was maintained at a temperature of about 115°C for 3 hours. The reaction mixture was then stripped for 1 hour at about 110°C at a pressure of 5 to 15mm Hg.

The product obtained from the above process was demineralised using 1kg of a demineralising/neutralising agent sold under the trade name "AMBOSOL 500" and available from Société Francaise Hoechst and 0.3kg of a filter aid sold under the trade name "PRIMSIL 741" and available from Manville de France SA. The mixture was heated to about 110°C for 1 hour then filtered using a Gauthier filter at about 110°C.

54.5kg of Piperazine 31-130 was obtained and the viscosity thereof at 40°C was 126cSt.

Example 2

Preparation of a Piperazine Initiated Polyoxyalkylene Heat Transfer Fluid (coded as Piperazine 31-220)

26kg of piperazine was charged to the reactor and mixed with a solution of potassium hydroxide (630g) in water (570g) at ambient temperature and pressure. Nitrogen was then bubbled through the reaction mixture until a pressure of 2 bar absolute was obtained.

The reaction mixture was then heated to about 120°C and maintained at that temperature for 1 hour 30 minutes. 24.5kg of a 3:1 weight ratio of ethylene oxide to propylene oxide was added over a period of 2 hours 15 minutes at a temperature of 125 to 145°C, during which time the pressure increased from 2.4 to 4.8 bar absolute. The temperature of the reaction mixture was then maintained at 125 to 145°C for a further period of 1 hour. The reaction mixture was stripped for 1 hour 30 minutes at about 110°C and under a vacuum of 5 to 15mm Hg

The reaction mixture was heated to about 115°C and then a further 259.7kg of a 3:1 weight ratio of ethylene oxide to propylene oxide added over a period of 12 hours 15 minutes, during which time the pressure increased from 2 bar to 7.7 bar absolute. The reaction mixture was then maintained at a temperature of about 115°C for a further 1 hour. The reaction mixture was then stripped for 1 hour at 110°C under a vacuum of 5 to 10mm Hg.

107kg of the product obtained from the second stripping process was mixed with a solution of potassium hydroxide (414g) in water (346g), at ambient temperature and pressure. The reaction mixture was then heated to a temperature of 120°C and maintained at that temperature for a period of 1 hour 30 minutes under a vacuum of 5 to 10mm Hg. Nitrogen was then bubbled through the reaction mixture until a pressure of 2 bar absolute was obtained.

A further 95.1kg of a 3:1 weight ratio of ethylene oxide to propylene oxide was added over a period of 4 hours at a temperature of 110 to 115°C, during which time the pressure increased from 2 bar to 4.4 bar absolute. The reaction mixture was maintained at a temperature of 110 to 115°C for a further 1 hour 45 minutes. The reaction mixture was then stripped for 1 hour at 110°C under a vacuum of 5 to 10mm Hg and yielded 205kg of product.

To 160 kg of the product was added 6 kg of a neutralising/demineralising agent sold under the trade name "AMBOSOL 500", 1 kg of a filter aid sold under the trade name "PRIMSIL 741" and 0.3 kg of a cellulose fibre filter aid referred to in the trade as "diatrose" and available from La Rochette. The mixture was heated to 110°C for 1 hour then filtered using a Gauthier filter at 110°C.

160 kg of Piperazine 31 -220 was obtained and the viscosity thereof at 40°C was 233 cSt.

## Example 3

### Preparation of a Piperazine Initiated Polyoxyalkylene Heat Transfer Fluid (coded as Piperazine 31-460)

7 kg of piperazine was charged to a reactor and mixed with a solution of potassium hydroxide (162g) in water (118g) at ambient temperature and pressure. Nitrogen was then bubbled through the reaction mixture until a pressure of 2 bar absolute was obtained.

The reaction mixture was then heated to a temperature of 120 to 125°C and 7.6 kg of a 3:1 weight ratio of ethylene oxide to propylene oxide was introduced over a period of 1 hour 15 minutes during which time the pressure increased from 2.9 bar to 4.2 bar absolute. The reaction mixture was maintained at a temperature of 120 to 125°C for a further 2 hours. The reaction mixture was then stripped for 1 hour 30 minutes at 120°C under a vacuum of 5 to 15mm Hg.

A further 33 kg of 3:1 weight ratio of ethylene oxide to propylene oxide was added over a period of 4 hours at a temperature of 115 to 120°C, during which time the pressure increased from 2 bar to 5.4 bar absolute. The reaction mixture was maintained at a temperature of 115 to 120°C for a further 2 hours. The reaction mixture was then stripped for 1 hour at 120°C under a vacuum of 5 to 15mm Hg and yielded 42 kg of product.

23 kg of the product was stirred at ambient temperature for 30 minutes and then heated to 110 to 120°C and maintained at that temperature for 1 hour under a vacuum of 5-10 mm Hg. Nitrogen was then bubbled through the reaction mixture until a pressure of 2 bar absolute was obtained.

37.4 kg of a 3:1 weight ratio of ethylene oxide to propylene oxide was added to the reaction mixture over a period of 5 hours at a temperature of 115 to 120°C, during which time the pressure increased from 2.6 bar absolute to 7.6 bar absolute. The reaction mixture was maintained at a temperature of about 120°C for a further 2 hours 30 minutes. The reaction mixture was stripped for 1 hour at 110°C under a vacuum of 5 to 15mm Hg.

A 31 kg sample of the resulting product was taken and it's viscosity was determined to be 287 cSt at 40°C.

To increase the viscosity, a further 25.6 kg of a 3:1 weight ratio of ethylene oxide to propylene oxide was added over a period of 3 hours 30 minutes at a temperature of about 115°C, during which time the pressure increased from 2 bar to 7.4 bar absolute. The reaction mixture was maintained at a temperature of about 120° C for a further 2 hours 30 minutes. reaction was continued for a further 2 hours. The reaction mixture was then stripped for 1 hour at 110° C under a vacuum of 5 to 10mm Hg.

A 1 kg sample was taken and it's viscosity determined to be 365 cSt at 40° C.

Again to increase the viscosity a further 8.65 kg of a 3:1 weight ratio of ethylene oxide to propylene oxide was added to the reaction mixture over a period of 1 hour 30 minutes at a temperature of about 120° C. The reaction mixture was maintained at that temperature for a further 2 hours. The reaction mixture was then stripped for 1 hour at 110° C under a vacuum of 5 to 10mm Hg and the product was found to have a viscosity of 460 cSt at 40° C.

The product was mixed with 1 kg of a demineralising/neutralising agent sold under the trade name "AMBOSOL 500" and 0.4 kg of a filter aid sold under the trade name "PRIMSIL 741" and maintained at 120° C for 1 hour, before filtering using a Gauthier filter.

57 kg of the product (coded Piperazine 31-460) was obtained.

Example 4

Preparation of a Piperazine Initiated Polyoxyalkylene Heat Transfer Fluid (coded as Piperazine 31-1300)

The remaining 45 kg of the 205 kg of product obtained in the production of Piperazine 31-220 in Example 2 was charged to a reactor and heated to about 110° C and maintained at that temperature for a period of 1 hour.

113.5 kg of a 3:1 weight ratio of ethylene oxide to propylene oxide was added to the reactor over a period of 7 hours 30 minutes at a temperature of 110 to 115° C, during which time the pressure increased from 2 bar to 10 bar absolute. The reaction mixture was maintained at 110 to 115° C for a further 3 hours 30 minutes. The reaction mixture was then stripped for 2 hours at about 110° C under a vacuum of 5 to 15mm Hg.

The product obtained was mixed with 5 kg of a neutralising/demineralising agent sold under the trade name "AMBOSOL 500", 1 kg of a filter aid sold under the trade name "PRIMSIL 741" and 0.3 kg of a cellulose fibre filter aid, referred to in the trade as "diatrose" and available from La Rochette. The mixture was maintained at a temperature of 110 to 120° C for 1 hour and then filtered at about 110° C using a Gauthier filter.

Approximately 155 kg of Piperazine 31-1300 was obtained and the viscosity thereof at 40° C was 1275 cSt.

Example 5

Preparation of Diethylenetriamine Initiated Polyoxyalkylene Heat Transfer Fluid (coded as Diethylenetriamine 31-180).

4 Kg of diethylenetriamine was charged to a reactor and mixed with 223 g of sodium methoxide powder at ambient temperature and pressure. Nitrogen was then bubbled through the mixture until a pressure of 3.4 bar absolute was obtained.

The mixture was then heated to a temperature of 120 to 125° C. 9.5 kg of a 3:1 weight ratio of ethylene oxide to propylene oxide was added over a period of 2 hours, during which time the pressure increased from 3.7 bar to 6 bar absolute. The reaction mixture was maintained at a temperature of 120 to 125° C for a further 2 hours. The reaction mixture was stripped for 1 hour 30 minutes at 110° C under a vacuum of 5 to 10mm Hg. A 4.5 kg sample was removed to determine the viscosity of the product.

To the remaining product a further 35 kg of a 3:1 by weight ratio of ethylene oxide to propylene oxide was added at a temperature of 115 to 120° C over a period of 6 hours 15 minutes, during which time the pressure increased from 3.4 bar to 6.4 bar absolute. The reaction mixture was maintained at a temperature of 115 to 120° C for a further 2 hours. The reaction mixture was then stripped at 110° C for 1 hour 30 minutes under a vacuum of 5 to 10 mm Hg.A 635g sample was taken and its viscosity determined to be 179.8 cSt at 40° C.

In order to try to increase the viscosity of the product a further 7 kg of a 3:1 weight ratio of ethylene oxide to propylene oxide was added to the reaction mixture at 115 to 120° C over a period of 1 hour 15 minutes, during which time the pressure increased from 3.4 bar to 4.8 bar absolute. The reaction mixture was maintained at 115 to 120°C for a further 1 hour 30 minutes. The reaction mixture was stripped for 1 hour 30 minutes at 110°C under a vacuum of 5 to 10 mm Hg. A 1 kg sample was taken and its viscosity determined to be 180 cSt at 40°C.

The product was mixed with 1.5kg of a neutralising/demineralising agent sold under the trade name "AMBOSOL 500" and 0.25kg of a filter aid sold under the trade name "PRIMSIL 741" and the mixture was heated to 110°C for 1 hour and then the mixture was filtered using a Gauthier filter at 110°C.

42 kg of the product (coded Diethylenetriamine 31-180) was obtained.

## Example 6

### Physical Properties

The materials obtained from Examples 1 to 5 were compared with two known heat transfer fluids in a variety of tests. The two known heat transfer fluids were;

1. A random copolymer of a 3:1 weight ratio of ethylene oxide and propylene oxide, initiated by trimethylol propane, having an average molecular weight of about 1200 (coded as VG127W).
2. VG127W formulated with about 1% by weight IRGANOX 1010 (coded as C145).

The above materials were tested as follows and the physical properties results are given in TABLE 1.

### 1.Viscosity

The kinematic viscosity of a heat transfer fluid was determined at 40°C and 100°C according to ASTM (American Society of Testing Materials) D445-79.

### 2.Viscosity Index

The viscosity index of the fluid was calculated according to ASTM D2270-79.

### 3.Flash Point

Flash points were determined using the Cleveland Open Cup technique, according to Institute of Petroleum Test Method IP36/ASTM D92

### 4.pH Values

pH values were determined at room temperature and pressure using a Corning 145 pH meter with 5% solution of the material in distilled water.

TABLE 1

| Code of Product | Viscosity cSt | | Viscosity Index | Molecular Weight | Flash Pt °C | pH Value | No Moles EO:PO |
|---|---|---|---|---|---|---|---|
| | at 40°C | at 100°C | | | | | |
| Piperazine 31-220 | 233 | 39 | 221 | 1918 | 300 | 10 | 26.5:11.5 |
| Piperazine 31-460 | 442 | 75 | 251 | 2984 | 292 | 10 | 41.8:18.2 |
| Piperazine 31-1300 | 1275 | 218 | 305 | 4795 | 245 | 10 | 69.3:30.1 |
| Diethylenetriamine 31-180 | 183 | 40 | 155 | 1860 | 282 | 10 | 25.4:11.0 |
| Piperazine 31-130 | 126 | 19 | 167 | 1000 | 300 | 10 | 13.2:5.7 |
| *C145 | 127 | 18 | 157 | 1200 | 250 | 7 | 15.4:6.7 |
| *VG127W | 127 | 18 | 157 | 1200 | 230 | 7 | 15.4:6.7 |

* denotes comparative examples

## Example 7

### Thermal Stability

The thermal stabilities of VG127W and C145 and the products obtained from Examples 1 to 5 were determined by thermogravimetric analysis in which the sample was heated from ambient to 250°C at a rate of 10°C per minute and then maintained at 250°C for a further 180 minutes in an air atmosphere, the air flow rate being 10 litres per hour. The experiment was repeated for Piperazine 31-130 using nitrogen in place of air. The thermal properties results are given in TABLE 2

TABLE 2

| Code or Name of Product | Thermal Stability (% Weight of Fluid Remaining) | | | | |
|---|---|---|---|---|---|
| | 0 mins | 50 mins | 100 mins | 150 mins | 200 mins |
| Piperazine 31-220 | 100 | 98 | 95 | 91 | 86 |
| Piperazine 31-460 | 100 | 98 | 70 | 38 | 29 |
| Piperazine 31-1300 | 100 | 33 | 18 | 12 | 10 |
| Diethylenetriamine 31-180 | 100 | 94 | 83 | 77 | 66 |
| Piperazine 31-130 (in air) | 100 | 93 | 84 | 75 | 68 |
| Piperazine 31-130 (in nitrogen) | 100 | 97.5 | 96.5 | 90.0 | 95.5 |
| *C145 | 100 | 52 | 27 | 20 | 18 |
| *VG127W | 100 | 24 | 17 | 10 | - |

* denotes comparative examples

The results for Piperazine 31-130 and the comparative results for C145 and VG127W show that polyoxyalkylene polymers initiated with an active nitrogen containing compound have greatly improved thermal stability compared to that of alcohol initiated polyoxyalkylene polymers which have a similar amount of ethylene oxide and propylene oxide residues.

## Example 8

Solder Reflow

50 grams of Piperazine 31-130 was placed in a crucible and heated to a temperature of 250°C in air.

A piece of polyethylene terephthalate sheet with a piece of solder attached was placed in the crucible and removed after a few seconds.

The solder had melted and flowed leaving a fresh clean piece of solder.

The plastic and solder was allowed to cool and was washed with cold water. The resulting soldered sheet was clean and free from decomposition products to visual inspection.

**Claims**

1. Use of compounds of formula
$X[AR]_n$
wherein X is the residue of an active nitrogen containing compound;
A is a random or block polyoxyalkylene residue, comprising 6 to 170 alkylene oxide residues, each residue having 2 to 4 carbon atoms
R is a hydrocarbyl residue or hydrogen; and
n is an integer having a value of at least 1 wherein for values greater than 1 each AR residue may be the same or different;
as heat transfer fluids.

2. Use of compounds as claimed in claim 1 in which each alkylene oxide residue has 2 or 3 carbon atoms.

3. Use of compounds as claimed in claim 2 in which the polyoxyalkylene residue comprises 0 to 10 propylene oxide residues for every 10 ethylene oxide residues.

4. Use of compounds as claimed in any preceding claim in which R is hydrogen or a hydrocarbyl residue comprising from 1 to 30 carbon atoms.

5. Use of compounds as claimed in any preceding claim in which X is the residue of an active hydrogen-containing amine or amide, or ammonia following active hydrogen removal.

6. Use of compounds as claimed in any preceding claim in which X is the residue of an alkylamine, an alkanolamine or an alkylenediamine.

7. Use of compounds as claimed in any preceding claim in which the compounds have a viscosity of 10 to 2000 cSt at 40°C.

8. A heat transfer fluid composition which comprises a compound of formula $X[AR]_n$ as hereinbefore defined, an anti-oxidant and optionally at least one additive selected from the group consisting of diluents, surface activators, corrosion inhibitors, buffers, wetting agents, anti-foaming agents, biocides and other heat transfer fluids.

9. A heat transfer fluid composition as claimed in claim 8 in which the composition has a pH of 7.0 to 11.5.

10. A process of heat treating an object which comprises contacting the object with a heat transfer fluid which comprises a compound of formula $X[AR]_n$ as hereinbefore defined at an elevated temperature.